(19) Europäisches Patentamt / European Patent Office / Office européen des brevets

(11) **EP 3 609 216 B1**

(12) **EUROPEAN PATENT SPECIFICATION**

(45) Date of publication and mention
of the grant of the patent:
**19.02.2025 Bulletin 2025/08**

(21) Application number: **18794466.5**

(22) Date of filing: **03.05.2018**

(51) International Patent Classification (IPC):
**H04W 24/00** $^{(2009.01)}$

(52) Cooperative Patent Classification (CPC):
**H04L 5/0051; H04W 24/10; H04B 17/345;**
**H04L 5/14; H04W 24/02**

(86) International application number:
**PCT/CN2018/085452**

(87) International publication number:
**WO 2018/202077 (08.11.2018 Gazette 2018/45)**

(54) **INTERFERENCE MEASUREMENT METHOD AND DEVICE**

INTERFERENZMESSVERFAHREN UND -VORRICHTUNG

PROCÉDÉ ET DISPOSITIF DE MESURE D'INTERFÉRENCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: 05.05.2017 CN 201710314215
16.05.2017 CN 201710344856

(43) Date of publication of application:
**12.02.2020 Bulletin 2020/07**

(73) Proprietor: **Huawei Technologies Co., Ltd.
Longgang District
Shenzhen, Guangdong 518129 (CN)**

(72) Inventors:
• **WU, Ming**
**Shenzhen**
**Guangdong 518129 (CN)**

• **ZHANG, Chi**
**Shenzhen**
**Guangdong 518129 (CN)**
• **MA, Xiaojun**
**Shenzhen**
**Guangdong 518129 (CN)**
• **QIN, Yi**
**Shenzhen**
**Guangdong 518129 (CN)**

(74) Representative: **Epping - Hermann - Fischer
Patentanwaltsgesellschaft mbH
Schloßschmidstraße 5
80639 München (DE)**

(56) References cited:
EP-A1- 2 701 423     WO-A1-2013/025558
WO-A1-2014/054219    WO-A1-2014/166455
WO-A1-2016/010354    CN-A- 104 284 355
CN-A- 104 284 361    CN-A- 104 581 805
US-A1- 2017 201 308

## Description

### TECHNICAL FIELD

This application relates to the communications field, and more specifically, to an interference measurement method and a device.

### BACKGROUND

In a wireless communications system, duplex may be divided into time division duplex (Time Division Duplex, TDD) and frequency division duplex (Frequency Division Duplex, FDD) based on different duplex modes. In a TDD mode, the communications system usually has only one operating frequency band, and the operating frequency band is used for only uplink communication or downlink communication in one time period. In an FDD mode, the communications system includes a pair of operating frequency bands, one of the operating frequency bands is used for only uplink communication, and the other operating frequency band is used for only downlink communication. Terminal devices are distributed unevenly in a communications network, and uplink and downlink service volumes of different terminal devices may also be different. Therefore, different network side devices have different uplink and downlink service volumes in one time period. In an existing TDD or FDD mode, different network side devices use a same uplink-downlink transmission configuration in one time period, and an actual service volume requirement of each network side device cannot be efficiently met. Therefore, a more flexible duplex technology is introduced in the prior art. To be specific, uplink and downlink transmission may be separately configured for each cell based on an actual service requirement. Such a duplex technology is usually referred to as a flexible duplex technology.

In the communications network in which the flexible duplex technology is used, when a terminal device is performing uplink communication, another terminal device in a neighboring cell may be performing downlink communication. When the terminal device that is performing downlink communication receives a downlink signal, the terminal device suffers interference from an uplink signal sent by the terminal device that is performing uplink communication, easily leading to a failure in receiving the downlink signal by the terminal device.

To resolve the problem, a network side device needs to perform coordination based on interference information between terminal devices. Therefore, how to perform interference measurement between the terminal devices is an urgent technical issue to be resolved.

From EP 2701423 A1 and WO 2013025558 A1 interference measurements in wireless networks are known.

### SUMMARY

The present invention is defined in the attached set of claims. This application provides interference measurement methods to perform interference measurement between terminal devices, and corresponding devices. Dependent claims provide preferred examples.

According to the technical solutions provided in this application, the terminal device can perform the first interference measurement by using the inconsecutive resource elements in frequency domain. This helps the terminal device to perform relatively accurate interference measurement.

### DESCRIPTION OF DRAWINGS

FIG. 1 is a schematic diagram of an example of a communication scenario in which cross-link interference exists;
FIG. 2 is a schematic diagram of an example of a possible measurement signal resource and a possible interference measurement resource;
FIG. 3 is a schematic interaction diagram of an example of an interference measurement method according to an example of this application;
FIG. 4 is a schematic diagram of another example of an interference measurement method according to an example of this application;
FIG. 5 is a schematic diagram of still another example of an interference measurement method according to an example of this application;
FIG. 6 is a schematic diagram of an example of an interference measurement resource according to an example of this application;
FIG. 7 is a schematic diagram of another example of an interference measurement resource according to an example of this application;

FIG. 8 is a schematic diagram of an example of a measurement signal resource according to an example of this application;

FIG. 9 is a schematic diagram of yet another example of an interference measurement method according to an example of this application;

FIG. 10 is a schematic diagram of still yet another example of an interference measurement method according to the invention of this application;

FIG. 11 is a schematic interaction diagram of another example of an interference measurement method according to an example of this application;

FIG. 12 is a schematic structural diagram of a terminal device according to an example of this application; and

FIG. 13 is a schematic structural diagram of a network side device according to an example of this application.

## DESCRIPTION OF EMBODIMENTS

The following describes technical solutions of this application with reference to accompanying drawings.

It should be understood that division of manners, cases, types, and examples in the examples of this application is only for ease of description, but should not constitute any special limitation, and features in various manners, types, cases, and examples may be combined when there is no contradiction.

It should be further understood that "first", "second", and "third" in the examples of this application are merely used for differentiation, but should not constitute any limitation on this application.

Methods in the examples of this application may be applied to a long term evolution (Long Term Evolution, LTE) system, a long term evolution advanced (Long Term Evolution Advanced, LTE-A) system, an enhanced long term evolution (enhanced Long Term Evolution, eLTE) system, and a new radio (New Radio, NR) communications system, or may be extended to similar wireless communications systems such as a wireless fidelity (Wireless Fidelity, WiFi) system, a worldwide interoperability for microwave access (Worldwide Interoperability for Microwave Access, WiMAX) system, and a 3rd Generation Partnership Project (3rd Generation Partnership Project, 3GPP) related cellular system.

In the examples of this application, a network side device is an apparatus that is deployed in a radio access network and that is configured to provide a wireless communication function for a terminal device. The network side device may include various forms of base stations, macro base stations, micro base stations (also referred to as small cells), relay stations, access points, and the like. In systems using different radio access technologies, a device having a function of a base station may have a different name. For example, the network side device may be an access point (Access Point, AP) in a wireless local area network (Wireless Local Area Network, WLAN), may be a base transceiver station (Base Transceiver Station, BTS) in global system for mobile communications (Global System for Mobile Communication, GSM) or code division multiple access (Code Division Multiple Access, CDMA), or may be an evolved NodeB (evolved NodeB, eNB or eNodeB) in an LTE system. Alternatively, the network side device may be a NodeB (NodeB) in a 3rd generation (3rd Generation, 3G) system. In addition, the network side device may be a relay station, an access point, an in-vehicle device, a wearable device, a network side device in a future 5th generation (fifth-generation, 5G) communications network, a network side device in a future evolved public land mobile network (Public Land Mobile Network, PLMN), or the like.

The terminal device in the examples of this application may also be referred to as user equipment (User Equipment, UE), an access terminal, a terminal device unit (terminal device unit), a terminal device station, a mobile console, a mobile station (Mobile Station, MS), a remote station, a remote terminal, a mobile device, a user terminal, a terminal (Terminal), a radio communications device, a terminal device agent, or a terminal device apparatus. The terminal device may include various handheld devices, in-vehicle devices, wearable devices, or computing devices that have a wireless communication function, or other processing devices connected to a wireless modem. The terminal device may further include a subscriber unit, a cellular phone (cellular phone), a smartphone (smartphone), a wireless data card, a personal digital assistant (Personal Digital Assistant, PDA) computer, a tablet computer, a wireless modem (modem), a handheld device (handset), a laptop computer (laptop computer), a machine type communication (Machine Type Communication, MTC) terminal, or a station (STATION, STA) in a wireless local area network (Wireless Local Area Networks, WLAN). The terminal device may be a cellular phone, a cordless telephone, a session initiation protocol (Session Initiation Protocol, SIP) telephone, a wireless local loop (Wireless Local Loop, WLL) station, or a terminal device in a next generation communications system, for example, a terminal device in a 5G network or a terminal device in a future evolved PLMN.

A resource element in the examples of this application may be understood as a resource element and is a (minimum) resource unit of a system resource. The resource element may be a resource element (Resource Element, RE) defined in an existing standard. In other words, the resource element is one OFDM symbol in time domain and one subcarrier in frequency domain. The resource element may alternatively be another resource element introduced in a future communications system. If another type of resource element is introduced in the future communications system, a symbol and a subcarrier in the examples of this application may correspond to a granularity of the resource element in time domain and frequency domain.

For ease of understanding of the examples of this application, interference in a communications system is first described briefly.

Specifically, interference caused by downlink communication to uplink communication or interference caused by uplink communication to downlink communication may become cross-link interference, which may also be referred to as contradirectional interference or has another name. In this application, for clear description, cross-link interference is used to uniformly indicate the foregoing two types of interference.

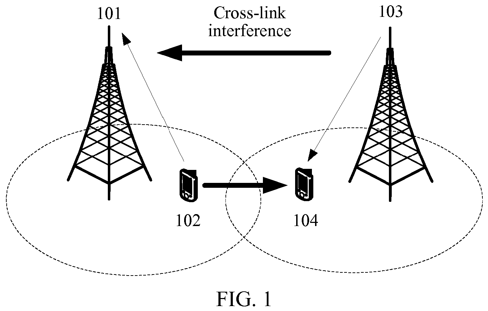

FIG. 1 is a schematic diagram of an example of a communication scenario in which cross-link interference exists. As shown in FIG. 1, assuming that a network side device 101 receives, in a first time period, an uplink signal of a terminal device 102 served by the network side device 101 (for ease of description, the uplink signal sent by the terminal device 102 may be denoted as a first uplink signal), and a network side device 103 sends, in the first time period, a downlink signal to a terminal device 104 served by the network side device 103 (for ease of description, the downlink signal sent by the network side device 103 may be denoted as a first downlink signal). In this case, the network side device 101 may not only receive the first uplink signal, but also receive the first downlink signal, and the first downlink signal causes interference to the first uplink signal. Similarly, the terminal device 104 not only receives the first downlink signal, but also receives the first uplink signal, and the first uplink signal causes interference to the first downlink signal.

Cross-link interference easily causes a signal transmission failure. To resolve the problem, a network side device needs to obtain interference information of the cross-link interference. The interference information is obtained based on interference measurement. During the interference measurement, a transmit end sends a measurement signal on a resource #A, and a receive end receives the measurement signal on a resource #B that is at a same location as the resource #A. The transmit end and the receive end device may be two different network side devices. Alternatively, the transmit end and the receive end may be two terminal devices. Optionally, the two terminal devices may belong to different cells.

Optionally, the measurement signal may be a reference signal, for example, a sounding reference signal (Sounding Reference Signal, SRS), a demodulation reference signal (Demodulation Reference Signal, DMRS), or a phase tracking reference signal (Phase Tracking Reference Signal, PTRS); or the measurement signal may be a data signal. The measurement signal received by the receive end may be a zero power channel state information reference signal (Zero Power Channel State Information Reference Signal, ZP CSI-RS), a non-zero power channel state information reference signal (Non-Zero Power Channel State Information Reference Signal, NZP CSI-RS), a DMRS, a zero power demodulation reference signal (Zero Power Demodulation Reference Signal, ZP DMRS), a zero power data signal (Zero Power data signal, ZP data signal), or the like.

Further, in an example, a terminal device performs interference measurement. It is assumed that a first terminal device performs interference measurement on a second terminal device, where the first terminal device belongs to a first cell, and the second terminal device belongs to a second cell. If the second terminal device sends a measurement signal on a resource #A, the first terminal device needs to receive the measurement signal on a resource #B. The resource #A and the resource #B are a resource belonging to the first cell and a resource belonging to the second cell, respectively. The resource #A and the resource #B correspond to time-frequency resources with a same sequence number (Index, index), or a time-frequency resource location corresponding to the resource #B is a subset of a time-frequency resource location corresponding to the resource #A, or a time-frequency resource location corresponding to the resource #A is a subset of a time-frequency resource location corresponding to the resource #B.

During interference measurement between terminal devices, a network side device (or a base station) configures an interference measurement resource for the terminal devices, and the terminal device performs measurement by using the configured interference measurement resource, and reports a measurement result. Optionally, the interference measurement resource may include at least two resource elements. The terminal devices may filter measurement results on the at least two resource elements (for example, obtain an average value of the measurement results), to obtain a final measurement result, and report the measurement result. For example, the interference measurement is performed between the first terminal device and the second terminal device. In an interference measurement process, the second terminal device may send a measurement signal, and the first terminal device may receive the measurement signal by using the interference measurement resource.

Resource elements included in a resource used to send the measurement signal may be inconsecutive in a same symbol. For example, the resource elements included in the resource used to send the measurement signal may be arranged in a comb form (where a comb may mean that there is a same subcarrier spacing between adjacent resource elements that are located in the same symbol among all resource elements). However, resource elements included in the interference measurement resource configured by the network side device for the terminal devices are consecutive in a same symbol. The first terminal device performs the interference measurement and filtering on the configured interference measurement resource. As a result, the first terminal device performs the interference measurement and filtering on a resource element with no measurement signal transmitted, and an interference measurement result is inaccurate.

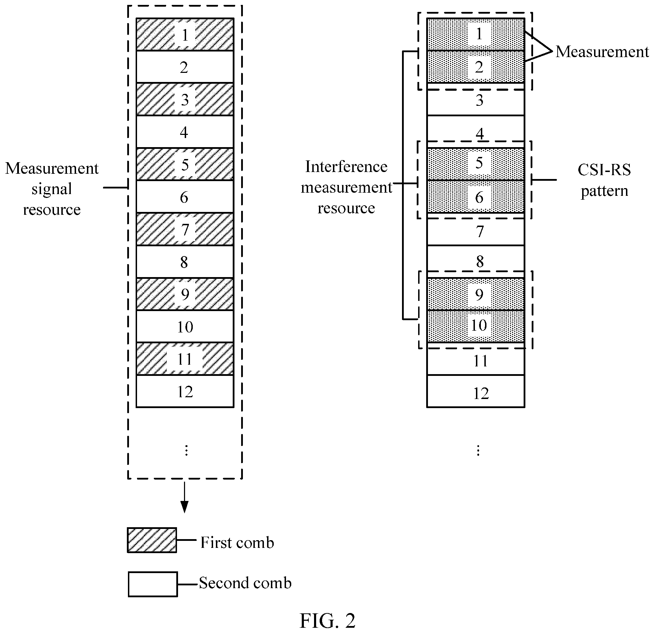

That the measurement signal is an SRS is used as an example. An SRS resource is distributed in a comb form in frequency domain, and two adjacent subcarriers on each comb SRS resource have a spacing L. Optionally, L may be equal to 2 or 4. FIG. 2 is a schematic diagram of an example of a possible measurement signal resource and a possible interference measurement resource. As shown in FIG. 2, the measurement signal resource may be an SRS resource. The SRS resource includes two combs. One of the two combs corresponds to subcarriers with odd sequence numbers (1, 3, 5, 7...), and the other comb corresponds to subcarriers with even sequence numbers (2, 4, 6, 8...). Both the combs are used for SRS sending. In the prior art, the two combs are usually used by two terminal devices in a cell to send uplink reference signals. That the interference measurement resource is a CSI-RS resource is used as an example. The CSI-RS resource corresponds to one or more CSI-RS resource element patterns (CSI-RS RE pattern). For ease of description, the "CSI-RS resource element pattern" may be denoted as a "CSI-RS pattern", and the CSI-RS pattern may be represented as (Y, Z). Y represents a quantity of consecutive resource elements in frequency domain, and Z represents a quantity of consecutive resource elements in time domain. For example, (Y, Z) may be a plurality of patterns such as (2, 1), (4, 1), (8, 1), (2, 2), and (2, 4).

If the measurement signal sent by the second terminal device is the SRS, the first terminal device performs the interference measurement based on the CSI-RS resource. The CSI-RS resource obtained by combining the CSI-RS patterns cannot match the SRS in a comb form. In other words, the configured CSI-RS resource corresponds to a plurality of combs of the SRS. In this case, if the first terminal device still performs the interference measurement and filtering on all configured CSI-RS resources, the first terminal device filters measurement signals on the plurality of combs corresponding to the SRS. If the measurement signals on the plurality of combs are from different terminal devices (for example, the measurement signals on the plurality of combs are from the second terminal device and a third terminal device), an inaccurate measurement result is caused. FIG. 2 is still used as an example. It is assumed that one of the two combs is used by the second terminal device to send an SRS, and the other comb is used by the third terminal device to send an SRS. Subcarriers corresponding to the CSI-RS pattern are consecutive. If the first terminal device still uses all the CSI-RS resources to perform measurement, measurement results from a second terminal device A and a second terminal device B may be confused. Consequently, a measurement result is inaccurate.

Based on the foregoing descriptions, an example of this application proposes an interference measurement method, to perform relatively accurate interference measurement between terminal devices.

It should be noted that the method in this example of this application not only can be used for interference measurement between terminal devices, but also can be used for interference measurement between network side devices, between a network side device and a terminal device, between a network side device and a relay device, and between relay devices. The following describes the interference measurement method in this example of this application in detail by using an example in which a terminal device performs interference measurement.

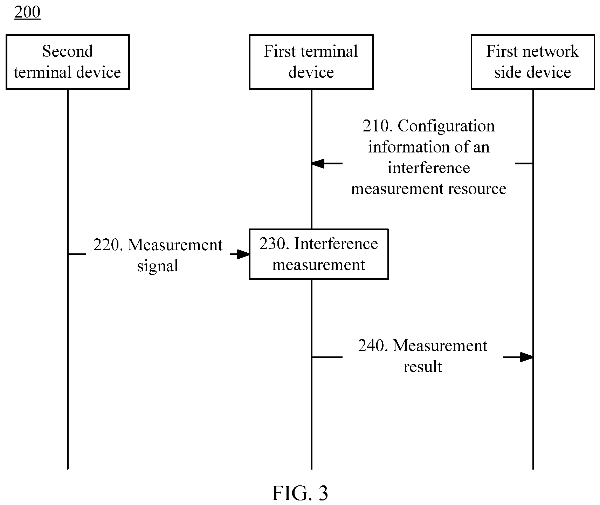

FIG. 3 is a schematic interaction diagram of an example of an interference measurement method according to an example of this application. It should be understood that FIG. 3 shows detailed steps or operations of the interference measurement method. However, these steps or operations are merely examples. In this example of this application, other operations or variants of various operations in FIG. 3 may be further performed.

As shown in FIG. 3, the method 200 may include step 210 and step 230. Optionally, the method 200 may further include step 220 and/or step 240.

210. A first network side device sends configuration information of an interference measurement resource; and correspondingly, a first terminal device receives the configuration information of the interference measurement resource from the first network side device.

Specifically, the configuration information of the interference measurement resource may be used to configure the interference measurement resource.

220. A second terminal device sends a measurement signal on a first measurement signal resource.

The first measurement signal resource may be understood as a resource used to send the measurement signal. Optionally, the first measurement signal resource may be configured by a second network side device. For example, the second network side device may send configuration information of a measurement signal resource, where the configuration information of the measurement signal resource is used to configure a resource for sending the measurement signal. The second terminal device may determine, based on the configuration information of the measurement signal resource, the first measurement signal resource that is used by the second terminal device to send the measurement signal.

The measurement signal may be a reference signal (for example, an SRS, a DMRS, a PTRS, or another RS) or another data signal.

230. The first terminal device performs first interference measurement by using a first measurement resource.

The performing, by the first terminal device, first interference measurement by using a first measurement resource may be understood as "performing, by the first terminal device, interference measurement on a signal received on the first measurement resource". Optionally, the interference measurement may include measuring at least one of a reference signal received power (Reference Signal Received Power, RSRP), reference signal received quality (Reference Signal Received Quality, RSRQ), a channel quality indicator (Channel Quality Indicator, CQI), channel state information (Channel State Information, CSI), and a received signal strength indicator (Received Signal Strength Indicator, RSSI). In addition, the interference measurement may include measuring another measurement parameter. This is not limited in this application.

240. The first terminal device reports an interference measurement result obtained based on the first interference measurement.

It can be learned from the foregoing that, when the first terminal device and the second terminal device perform the interference measurement, a time-frequency location of the first measurement resource used by the first terminal device to perform the measurement should be the same as time-frequency locations of all or some resources used by the second terminal device to send the measurement signal.

In other words, a frequency domain location of a resource element that is of the first measurement resource and that is located in a first symbol is the same as frequency domain locations of all or some resource elements that are located in a second symbol and that are used by the second terminal device to send the measurement signal (in other words, subcarriers have a same sequence number). Optionally, the first symbol and the second symbol are located at a same time domain location (in other words, the symbols have a same sequence number). Considering that the first symbol and the second symbol may have different sequence numbers if timing of cells in which the two terminal devices are located is not aligned, it is only required that the first terminal device be able to receive, on the resource element in the first symbol, the measurement signal that is sent by the second terminal device in the second symbol. The first symbol is any symbol corresponding to the first measurement resource. In other words, the time-frequency location corresponding to the first measurement resource is the same as all or some time-frequency locations corresponding to the first measurement signal resource, and the first measurement resource and the first measurement signal resource are resources belonging to different cells.

Based on this, in this example of this application, the interference measurement may be performed in at least one of the following several manners.

Manner 1

A new measurement manner is defined. For ease of description, the measurement manner may be denoted as a "discontinuous measurement manner".

Specifically, the discontinuous measurement manner may be performing measurement based on inconsecutive resource elements (for example, comb resource elements or some of the comb resource elements). In other words, in the discontinuous measurement manner, the measurement can be performed based on resource elements arranged at spacings (at equal spacings or unequal spacings).

In other words, in step 230, the first measurement resource is a proper subset of the interference measurement resource, a quantity of resource elements of the first measurement resource that are located in a same symbol is $M \geq 2$, and a spacing in frequency domain between two adjacent resource elements of the M resource elements of the first measurement resource that are located in the same symbol is more than one subcarrier.

It should be understood that, in this example of this application, a quantity of subcarriers spaced between two subcarriers is equal to a difference between sequence numbers corresponding to the two subcarriers. For example, there is a spacing of two subcarriers between a subcarrier with a sequence number #1 and a subcarrier with a sequence number #3. For another example, there is a spacing of three subcarriers between the subcarrier with the sequence number #1 and a subcarrier with a sequence number #4.

It can be learned from the foregoing that the first measurement signal resource used by the second terminal device to send the measurement signal is distributed at spacings in frequency domain (for example, distributed in a comb form). Correspondingly, the measurement signal sent by the second terminal device by using the first measurement signal resource is distributed at spacings in frequency domain. For example, resource elements of the first measurement signal resource that are located in a same symbol is distributed at equal spacings in frequency domain (for example, a spacing in frequency domain between two adjacent resource elements in the same symbol is N subcarriers), and the measurement signal that is sent by the second terminal device by using the first measurement signal resource distributed at equal spacings in frequency domain is distributed at spacings in frequency domain. The first terminal device needs to perform the interference measurement on all or a part of the measurement signal sent by the second terminal device by using the first measurement signal resource. The time-frequency location of the first measurement resource is the same as all or some of the time-frequency locations of the first measurement signal resource.

Based on this, in an optional example, resource elements of the first measurement resource that are located in the same symbol may be arranged in at least one of the following several manners: 1. The spacing in frequency domain between the two adjacent resource elements of the first measurement resource that are located in the same symbol is N, and the spacing in frequency domain between the two adjacent resource elements of the first measurement resource that are located in the same symbol is equal to the spacing in frequency domain between the two adjacent resource elements of the first measurement signal resource that are located in the same symbol. For example, subcarriers of the first measurement resource that are located in the first symbol include subcarriers with sequence numbers #J, #J+N, #J+2N, .... A value of N may be determined based on a quantity of combs included in a symbol in the first measurement signal resource. For example, if the symbol in the first measurement signal resource includes two combs, N=2.

2. The spacing in frequency domain between the two adjacent resource elements of the first measurement resource that are located in the same symbol is subcarriers whose quantity is an integer multiple of N (in other words, resource elements in the same symbol may be arranged at unequal spacings). For example, subcarriers of the first measurement resource that are located in the same symbol include subcarriers with sequence numbers #J, #J+N, #J+3N, .... In other words, the time-frequency resource location of the first measurement resource may be the same as some of the time-frequency locations of the first measurement signal resource. For related descriptions about N, refer to the foregoing related descriptions. For brevity, details are not described herein again.

In the foregoing descriptions, it is implicitly expressed that there are at least two resource elements of the first measurement resource that are located in the same symbol. A network side device usually configures that a terminal device performs measurement by using a frequency domain resource. For example, the first network side device configures that the first terminal device performs measurement by using a frequency domain resource. The frequency domain resource may include a plurality of resource blocks (Resource Block, RB). There are at least two resource elements of the first measurement resource that are located in the same symbol. However, there may be one resource element that is in an RB of the first measurement resource and that is located in a same symbol.

Based on a CSI framework discussed in NR, the measurement manner and a link may be combined, an attribute of the link includes an attribute (quantity), and the quantity may be channel measurement or interference measurement. The foregoing measurement manner may be defined to be used for a type of link; or a new link type may be defined, and the foregoing discontinuous measurement manner is used for the new link type. For example, a new link is defined as a cross link.

Further, a corresponding link type (the cross link) or the measurement manner (the discontinuous measurement manner) may be notified by using a measurement set (for example, the cross link type or the discontinuous measurement manner may be added to configuration information in the measurement set, that is, the measurement set may include the cross link type or the discontinuous measurement manner), or may not be notified by using a measurement set (for example, the measurement set does not include the cross link type or the discontinuous measurement manner, and the first network side device may configure the cross link type or the discontinuous measurement manner by using other configuration information). The first network side device may instruct, by using explicit or implicit indication signaling, the first terminal device to perform measurement by using the discontinuous measurement manner. For example, the first network side device may send instruction information to the first terminal device. The instruction information is used to explicitly or implicitly instruct the first terminal device to perform the first interference measurement by using the first measurement resource (that is, perform measurement by using the discontinuous measurement manner).

In an optional example, the first network side device may use F (F≥1) bits to notify a link type in the measurement set, and the first terminal device determines, by using the link type, a corresponding measurement manner to be used; or the first network side device directly instructs the first terminal device to use the measurement manner to perform the interference measurement.

In another optional example, the first network side device may further notify the first terminal device by using implicit signaling. For example, the first terminal device determines, by using existing configuration signaling or other new configuration signaling, which interference measurement manner is used currently. In addition, some predefined rules may be further used to determine an interference measurement manner. For example, different resources are predefined for the interference measurement and other measurement (for example, channel measurement). For example, measurement resources on some fixed time domain resource elements or some fixed frequency domain resource elements or measurement resources in some symbols on a time domain resource element are definitely used for the interference measurement. After the first terminal device receives the instruction information of the first network side device and determines the interference measurement resource, if the interference measurement resource is located on the foregoing particular time-frequency resource, the first terminal device may determine to use the measurement manner on the measurement resource.

The foregoing instruction information used to explicitly or implicitly instruct the first terminal device to use the first measurement resource to perform the first interference measurement may be carried in one or more of broadcast information (for example, a master information block (Master Information Block, MIB) or a system information block (System Information Block, SIB)), higher layer signaling (for example, radio resource control (Radio Resource Control, RRC) signaling), media access control (Media Access Control) MAC control entity (Control Entity, CE) signaling, and physical layer signaling (for example, downlink control information (Downlink Control Information, DCI)).

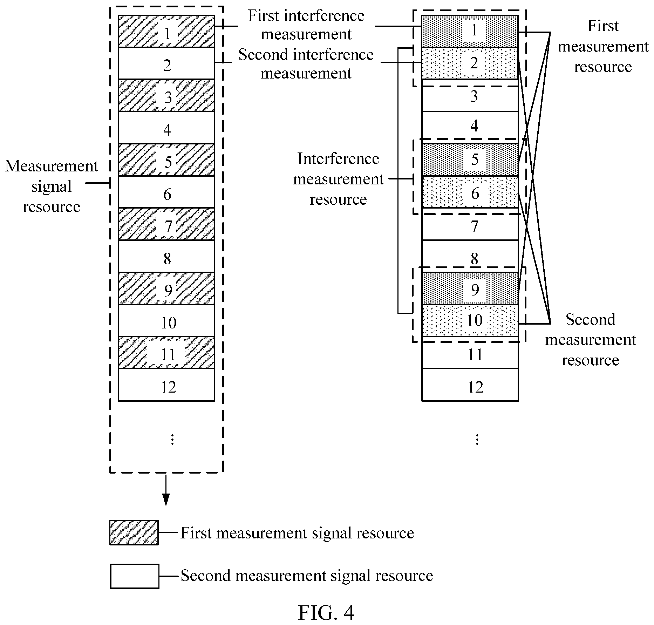

FIG. 4 is a schematic diagram of another example of an interference measurement method according to an example of this application. As shown in FIG. 4, it is assumed that a measurement signal resource includes two combs, and the second terminal device sends the measurement signal on a first comb of a symbol #P. In other words, a time domain resource corresponding to the first measurement signal resource is the symbol #P, and a frequency domain resource corresponding to the first measurement signal resource is a subcarrier with an odd sequence number. The first measurement resource is all or some resource elements of the first measurement signal resource corresponding to the time domain resource that is the symbol #P and the frequency domain resource that is the subcarrier with an odd sequence number. The first terminal device performs the first interference measurement by using the first measurement resource. For example, assuming that the first measurement signal resource includes all subcarriers with odd sequence numbers in the symbol #P, the first measurement resource may include all the subcarriers with odd sequence numbers in the symbol #P, or the first measurement resource may include some subcarriers with odd sequence numbers in the symbol #P (for example, include only subcarriers with subcarrier sequence numbers 1, 5, and 9). If the timing of the two cells is not aligned, the first measurement resource and the first measurement signal resource may partially overlap in time domain.

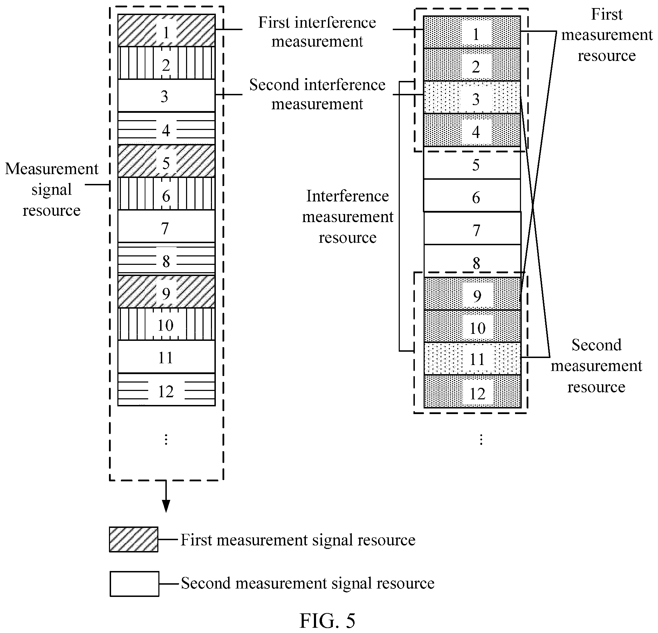

FIG. 5 is a schematic diagram of still another example of an interference measurement method according to an example of this application. As shown in FIG. 5, it is assumed that a measurement signal resource includes four combs, and the second terminal device sends a reference signal on a first comb of a symbol #P. In other words, a time domain resource corresponding to the first measurement signal resource is the symbol #P, and frequency domain resources corresponding to the first measurement signal resource are subcarriers with sequence numbers 1, 5, 9, .... The first terminal device may perform the interference measurement based on the first measurement resource whose time domain resource is the symbol #P and whose frequency domain resources are all or some of the subcarriers with sequence numbers 1, 5, 9, ...

The first terminal device may determine the interference measurement resource by receiving the configuration information of the interference measurement resource that is sent by the first network side device. It can be learned from the foregoing that the interference measurement resource may include a plurality of comb resource elements. Therefore, the first measurement resource used by the terminal device to perform the interference measurement is a subset or a proper subset of the interference measurement resource. The first terminal device may perform measurement and filtering on the first measurement resource, and report a measurement result obtained through the filtering performed based on the first measurement resource. The measurement result is included in a report set of the first terminal device.

After receiving information about the interference measurement resource, the first terminal device may determine, according to a predefined rule (for example, the interference measurement resource is predefined to be configured on only some time-frequency resources) or based on instruction information of a base station, whether to use a measurement method of this solution in this application.

Even if it is determined that the measurement method of this solution is to be used, that is, the measurement is to be performed on some or all of the comb resource elements, a specific comb pattern used by the second terminal device to send the measurement signal further needs to be determined. For example, there are a comb with a spacing of two subcarriers and a comb with a spacing of four subcarriers, and different comb patterns for sending correspond to different specific measurement actions. The first network side device may instruct, by using instruction information, the first terminal device to use a corresponding measurement method. In addition, the first network side device may alternatively implicitly notify the terminal device of the corresponding measurement method by using the configured interference measurement resource. For example, when the interference measurement resource configured by the first network side device for the first terminal device has some patterns, the first terminal device may determine that the resource for sending the measurement signal has a comb pattern with the spacing of two or four subcarriers, and further determine which resource is the first measurement resource, so as to perform the interference measurement. A rule for determining a specific measurement method based on the configured interference measurement resource needs to be predefined by the network side device and the terminal device, and this may be defined in a communication standard.

In other words, the first terminal device may determine the first measurement resource based on the interference measurement resource. In an optional example, there may be a correspondence between the interference measurement resource and the first measurement resource. Optionally, the first network side device and the first terminal device may predetermine a relative position of the first measurement resource and/or a relative position of a second measurement resource in the interference measurement resource.

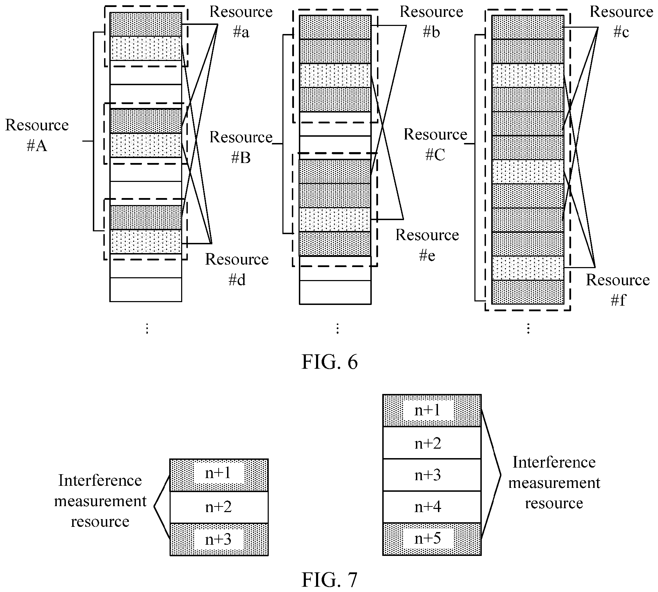

FIG. 6 is a schematic diagram of an example of an interference measurement resource according to an example of this application. As shown in FIG. 6, assuming that the interference measurement resource is a resource #A shown in FIG. 6, the first terminal device may determine that the first measurement resource is a resource #a shown in FIG. 6. Assuming that the interference measurement resource is a resource #B shown in FIG. 6, the first terminal device may determine that the first measurement resource is a resource #b shown in FIG. 6. Assuming that the interference measurement resource is a resource #C shown in FIG. 6, the first terminal device may determine that the first measurement resource is a resource #c shown in FIG. 6.

In addition, if there are a plurality of comb SRSs, one of comb patterns, for example, the comb with the spacing of two or four subcarriers, may be predetermined for performing the interference measurement in this application. In this case, the first terminal device performing the interference measurement no longer needs to determine what comb pattern the resource for sending the measurement signal has.

In the manner 1 in this example of this application, the new measurement manner is defined. In the measurement manner, measurement can be performed on inconsecutive subcarriers, so that relatively accurate interference measurement can be performed between the terminal devices.

Manner 2

An interference measurement resource having a new pattern is defined. For ease of description, the interference measurement resource may be denoted as a "discontinuous interference measurement resource".

Specifically, different from continuous arrangement of resource elements of an interference measurement resource that are located in a same symbol in the prior art, resource elements of the discontinuous interference measurement resource that are located in the same symbol are arranged discontinuously.

In other words, in step 210, resource elements of the interference measurement resource that are located in the same symbol and that are indicated by the configuration information of the interference measurement resource are arranged discontinuously. That the interference measurement resource is a CSI-RS resource is used as an example. An inconsecutive CSI-RS pattern may be defined.

For example, the inconsecutive CSI-RS pattern may be a resource element pattern, that is, a (1, 1) pattern. The first measurement resource may include one or more (1, 1) patterns arranged at spacings, corresponding to a comb pattern of the measurement signal. The first terminal device may perform the interference measurement by using the one or more (1, 1) patterns.

For another example, an inconsecutive (2, 1) or (4, 1) pattern may be added, and a spacing between two subcarriers included in the inconsecutive (2, 1) pattern is greater than 1 (that is, the two subcarriers are inconsecutive). Similarly, a spacing between any two of four subcarriers included in the inconsecutive (4, 1) pattern is greater than 1.

FIG. 7 is a schematic diagram of another example of an interference measurement resource according to an example of this application. As shown in FIG. 7, it is assumed that the first measurement signal resource is in a comb form, that the interference measurement resource may include a plurality of inconsecutive (2, 1) patterns, and that the first terminal device may perform the interference measurement by using one or more inconsecutive (2, 1) patterns.

In an optional example, a pattern of the interference measurement resource may be set based on a resource occupied by the second terminal device to send the measurement signal. For example, a comb pattern or another pattern may be directly configured as the pattern of the interference measurement resource.

Optionally, the inconsecutive CSI-RS pattern may be configured by the first network side device for the first terminal device by using signaling. Further, optionally, the first network side device may configure a plurality of inconsecutive CSI-RS patterns, and dynamically indicate a specific inconsecutive CSI-RS pattern used by the first terminal device to perform the interference measurement.

It should be noted that the first network side device may explicitly or implicitly indicate the inconsecutive CSI-RS pattern used by the first terminal device. For details, refer to the foregoing related descriptions of indicating, by the first network side device, the measurement manner to the first terminal device. For brevity, details are not described herein again.

Manner 3

A new measurement signal sending manner is defined. For ease of description, the new measurement signal sending manner may be denoted as a "continuous measurement signal sending manner".

In other words, in step 220, a spacing between two subcarriers that are included in the first measurement signal resource and that are located in the same symbol may be 1.

For example, the second terminal device does not use a comb to send the measurement signal. In other words, the second terminal device may send the measurement signal on consecutive subcarriers in one or more RBs.

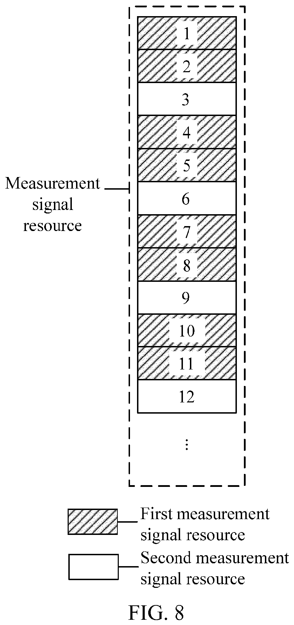

For another example, a consecutive comb pattern may be defined. Among a plurality of resource elements included in the consecutive comb pattern, there are resource elements with a spacing of one subcarrier (that is, there are resource elements on consecutive subcarriers). The consecutive comb pattern can be used for the interference measurement. FIG. 8 is a schematic diagram of an example of a measurement signal resource according to an example of this application. As shown in FIG. 8, if the second terminal device uses the consecutive comb pattern to send the measurement signal, the first terminal device may use the existing interference measurement resource to perform the interference measurement.

For still another example, a plurality of combs may be configured for the second terminal device to send the measurement signal. For example, assuming that the measurement signal resource has a maximum of four combs, two consecutive combs may be configured for the second terminal device to send the measurement signal. If the second terminal device uses the two consecutive combs to send the measurement signal, the first terminal device may use the existing interference measurement resource to perform the interference measurement.

In an optional example, the continuous measurement signal sending manner may be specifically configured by the first network side device for the first terminal device by using signaling. Further, optionally, the first network side device may configure a plurality of continuous measurement signal sending manners, and dynamically indicate, to the first terminal device, a specific continuous measurement signal sending manner used to send the measurement signal.

It should be noted that the second network side device may explicitly or implicitly indicate the continuous measurement signal sending manner used by the first terminal device. For details, refer to the foregoing related descriptions of indicating, by the first network side device, the measurement manner to the first terminal device. For brevity, details are not described herein again.

Optionally, there is one timing advance in uplink transmission of the second terminal device. In other words, an uplink signal needs to be sent ahead of a time at which a network side device sends a downlink signal. This causes timing misalignment between two transmission directions in different cells. It is highly likely that a downlink symbol is advanced relative to an uplink symbol, and an advanced time length exceeds a length of a cyclic prefix (Cyclic Prefix, CP). As a result, a receive end cannot correctly receive the uplink signal.

Based on this, the interference measurement method in this example of this application can resolve the problem of timing misalignment in different cells in at least one of the following several manners, to improve accuracy of the interference measurement.

Manner 1

The second terminal device may send the measurement signal in a plurality of symbols.

In other words, in step 220, the first measurement signal resource includes resource elements in consecutive symbols.

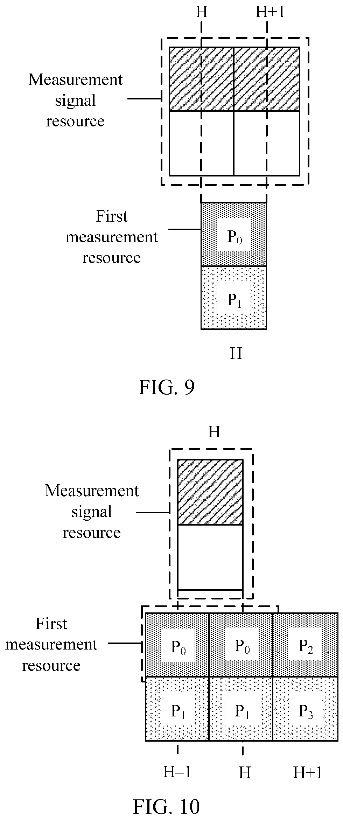

FIG. 9 is a schematic diagram of yet another example of an interference measurement method according to an example of this application. As shown in FIG. 9, the second terminal device may send the measurement signal in a symbol #H and a symbol #H+1. The first terminal device performs the interference measurement on a signal received in the symbol #H, to improve accuracy of the interference measurement.

In other words, the frequency domain location of the resource element that is included in the first measurement resource and that is located in the first symbol is the same as the frequency domain locations of all or some resource elements that are located in the second symbol and that are used by the second terminal device to send the measurement signal, and the same as frequency domain locations of all or some resource elements that are located in a third symbol and that are used by the second terminal device to send the measurement signal. The first symbol and the second symbol have a same sequence number, the second symbol and the third symbol are consecutive symbols, and the second symbol is located before the third symbol.

It should be understood that, for the manner 1, powers for sending the measurement signal in two symbols by the second terminal device should be the same, and beams (beam) for sending should be the same, in other words, two signals should have a same quasi-co-location (quasi-co-location, QCL) relationship, so as to improve measurement accuracy.

Further, the second terminal device may send the measurement signal on 2M symbols. It may be considered that the 2M symbols correspond to M measurement signal symbol groups (each symbol group includes two symbols). The second terminal device may send the measurement signal on the M measurement signal symbol groups. Correspondingly, the first terminal device performs the interference measurement on signals received on M symbols corresponding to the M measurement signal symbol groups. A spacing between any two of the M symbols is an even quantity of symbols. In other words, sequence numbers (indexes) of symbols in the interference measurement resource that are used by the receive end device are #I, #I+2, #I+4, ....

For example, if the second terminal device sends the measurement signal in symbols with symbol sequence numbers #1, #2, #3, #4, #5, and #6, the first terminal device may perform the first interference measurement by using the symbols with the symbol sequence numbers #1, #3, and #5.

In addition to the measurement between the terminal devices, the foregoing method is also applicable to measurement between network side devices or other measurement. In different measurement cases, a resource for sending the measurement signal and a resource for receiving the measurement signal may be different. For example, the resources may no longer be an SRS resource or a CSI-RS resource. However, this does not affect this solution to be applicable to another measurement scenario.

Manner 2

The first terminal device may perform the interference measurement in a plurality of consecutive symbols.

In other words, in step 230, the first measurement resource includes resource elements in symbols having consecutive sequence numbers.

FIG. 10 is a schematic diagram of still yet another example of an interference measurement method according to an example of this application. As shown in FIG. 10, the second terminal device may send the measurement signal in a symbol #H, and the first terminal device may perform the interference measurement (the first interference measurement) on signals received in a symbol #H-1 and the symbol #H, and perform the interference measurement on a signal received in a symbol #H+1.

An interference measurement result corresponding to a symbol #N is obtained based on a measurement result corresponding to the symbol #H-1 and the symbol #H and a measurement result corresponding to the symbol #H+1.

Optionally, the interference measurement result may meet the following formula:

$$P_N = 2P_0 - P_2,$$

where

$P_N$ is total power of REs corresponding to the symbol #H when it is assumed that measurement signal sending of the second terminal device is aligned with downlink reference signal receiving of the first terminal device; $P_0$ is total power, measured by the first terminal device, of REs corresponding to the symbol #H-1; and $P_2$ is total power, measured by the first terminal device, of REs corresponding to the symbol #H+1.

Optionally, the second terminal device sends the measurement signal in the symbol #H, and the first terminal device may perform the interference measurement on the signals received in the symbol #H-1 and the symbol #H, and perform the interference measurement on the signal received in the symbol #H+1.

It should be understood that for the manner 2, powers for sending a signal in the two symbols adjacent to the symbol in which the second terminal device sends the measurement signal should be the same. Further, optionally, assuming that the second terminal device sends the measurement signal in the symbol #H, powers for sending a signal in the symbol #H-1, the symbol #H+1, and the symbol #H+2 by the second terminal device can be the same.

Optionally, the first terminal device may further perform the interference measurement (the first interference measurement) on the signals received in the symbol #H-1 and the symbol #H, and perform the interference measurement on a signal received in a symbol #H-2. For detailed descriptions, refer to the foregoing related descriptions. For brevity, details are not described herein again.

Manner 3

The first terminal device and the second terminal device may transmit signals by using different subcarrier spacings (or numerology).

Specifically, symbols corresponding to different subcarrier spacings have different duration. A larger subcarrier spacing corresponds to shorter symbol duration. In other words, a subcarrier spacing corresponding to the first measurement resource is different from a subcarrier spacing corresponding to a second measurement resource. Further, the subcarrier spacing corresponding to the first measurement resource is greater than the subcarrier spacing corresponding to the second measurement resource, or the subcarrier spacing corresponding to the first measurement resource is n times the subcarrier spacing corresponding to the second measurement resource, so as to resolve the timing misalignment problem.

When a large subcarrier spacing and the new measurement method defined in this example are jointly used for interference measurement, it may be considered that the link type in this example not only corresponds to the interference measurement method in this example, but also corresponds to use of the spacing of one subcarrier (or numerology). For example, when the first network side device indicates that the link type is the new type (for example, the cross link) in this example, after the first terminal device receives instruction information, the first terminal device may not only determine the corresponding measurement method, but also know to receive measurement information by using a subcarrier spacing #E (numerology #E). The subcarrier spacing may be different from a subcarrier spacing used for data in a current cell, and the subcarrier spacing is larger than a subcarrier spacing used to send the measurement signal. Based on the foregoing discussions, a plurality of measurement signal types may be predefined or a plurality of types of other resources are defined for sending the measurement signal. For example, a type of measurement signal is used for channel measurement, and a type of measurement signal is used for interference measurement. The interference measurement may be further classified into a codirectional interference type and a cross interference type. There are different configuration methods for different types of measurement signals. When the network side device indicates the interference measurement, or indicates that a current measurement signal configuration is a measurement signal configuration of an interference measurement type, or when there is other explicit or implicit configuration information, a configuration method in this example is used. In this way, the network side device does not need to indicate a configuration for each SRS symbol, thereby reducing overheads. Specific signaling may be one or more of broadcast signaling, higher layer signaling (including RRC signaling), MAC CE signaling, and L1 physical layer signaling (for example, DCI).

Further, the first terminal device may select, based on an indication of the first network side device, a beam for sending the measurement signal, or may autonomously select a beam for sending the measurement signal. When the interference measurement is performed, the first network side device may configure a measurement resource for a terminal device based on the foregoing configuration method, or a terminal device autonomously selects a measurement resource and a sending beam according to the foregoing rule.

Optionally, in this example of this application, when the second terminal device sends the measurement signal, the second network side device serving the second terminal device may reserve some resources on which no signal is sent, and the resources are used by the first terminal device for background measurement. A measured background may be considered as including interference caused by another cell. A result obtained by subtracting interference strength of the background from total interference strength measured on the first measurement resource can be considered as interference strength that needs to be measured.

In other words, the method 230 may further include:

performing, by the first terminal device, second interference measurement by using the second measurement resource.

The second measurement resource corresponds to a second measurement signal resource. The second measurement signal resource is a reserved resource, and both a terminal device and a network side device in a serving cell in which the second terminal device is located do not use the second measurement signal resource to send signals. A time-frequency location of the second measurement resource is the same as all or some time-frequency locations of the second measurement signal resource. For a relationship between the second measurement resource and the second measurement signal resource, refer to a relationship between the first measurement resource and the first measurement signal resource. For brevity, details are not described herein again.

Further, step 240 may include:

reporting, by the first terminal device, an interference result obtained based on the first interference measurement and the second interference measurement.

Specifically, the second measurement resource may correspond to a resource on which the serving cell of the second terminal device does not transmit a signal. In other words, on the second measurement resource, there is no signal from the serving cell of the second terminal device.

The first terminal device may perform the second interference measurement by using the second measurement resource. (It should be understood that for detailed descriptions of the second interference measurement, reference may be made to the related descriptions of the first interference measurement. For brevity, details are not described herein again.) For example, assuming that the first terminal device performs the first interference measurement by using a discontinuous measurement manner, the first terminal device may perform the second interference measurement by using the discontinuous measurement manner. In other words, a spacing in frequency domain between any two resource elements of the second measurement resource that are located in a same symbol is more than one subcarrier, and resource elements included in the second measurement resource do not overlap with resource elements included in the first measurement resource.

FIG. 4 is still used as an example. The measurement signal resource includes two combs, one comb is used by the second terminal device to send the measurement signal, and the other comb is not used to send a signal (the comb that is not used to send a signal is the second measurement signal resource). The first terminal device may perform the first interference measurement by using the first measurement resource in the discontinuous measurement manner described in the manner 1 (that is, perform the interference measurement on the measurement signal), and perform the second interference measurement by using the second measurement resource (that is, perform background noise measurement). For example, accurate interference between the terminal devices may be obtained by subtracting, from total interference obtained based on the first measurement resource, total interference obtained based on the second measurement resource.

FIG. 5 is still used as an example. The measurement signal resource includes four combs. One comb (the first measurement signal resource) is used by the second terminal device to send the measurement signal, and another comb (the second measurement signal resource) among the four combs is not used to send a signal. The first terminal device may perform the first interference measurement by using the first measurement resource corresponding to the first measurement signal resource, and perform the second interference measurement by using the second measurement resource corresponding to the second measurement signal resource.

Further, the measurement result may include a plurality of cases. For example, the measurement result may include at least one of a total power value measured by the first terminal device based on the first measurement resource, a total power value measured by the first terminal device based on the second measurement resource, and a difference between the total power value measured by the first terminal device based on the first measurement resource and the total power value measured by the first terminal device based on the second measurement resource.

FIG. 9 is used as an example. The interference measurement result may meet the following formula:

$$P_{\text{intefere}} = \text{RSSI\_P}_0 - \text{RSSI\_P}_1,$$

where

$P_{intefere}$ may be considered as interference strength of interference caused by uplink communication of the second terminal device to downlink communication of the first terminal device, $RSSI\_P_0$ may be understood as a total power value obtained by measuring, by the first terminal device, REs of the first measurement resource that are located in a symbol #H (or may be understood as a total power value obtained in the first interference measurement), and $RSSI\_P_1$ may be understood as a total power value obtained by measuring, by the first terminal device, REs of the second measurement resource that are located in a symbol #H (or may be understood as a total power value obtained in the second interference measurement, that is, background noise measurement).

FIG. 10 is used as an example of the invention. According to the invention the interference measurement result meets the following formula:

$$P_{intefere}=(2RSSI\_P_0–RSSI\_P_2)–(2RSSI\_P_1–RSSI\_P_3),$$

where

$P_{intefere}$ is an interference strength of interference caused by uplink communication of the second terminal device to downlink communication of the first terminal device, $(2RSSI\_P_0\text{-}RSSI\_P_2)$ is a total power value obtained in the first interference measurement, $(2RSSI\_P_1\text{-}RSSI\_P_3)$ is a total power value obtained in the second interference measurement (that is, background noise measurement), $RSSI\_P_0$ is a total power value obtained by measuring, by the first terminal device, REs of the first measurement resource that correspond to a symbol #H-1, $RSSI\_P_2$ is a total power value obtained by measuring, by the first terminal device, REs corresponding to a symbol #H+1 (frequency domain locations of the REs corresponding to the symbol #H+1 are the same as frequency domain locations of all or some REs of the first measurement resource (or the first measurement signal resource) that correspond to the symbol #H), $RSSI\_P_1$ is a total power value obtained by measuring, by the first terminal device, REs of the second measurement resource that correspond to a symbol #H-1, and $RSSI\_P_3$ is a total power value obtained by measuring, by the first terminal device, REs corresponding to a symbol #H+1 (frequency domain locations of the REs corresponding to the symbol #H+1 are the same as frequency domain locations of all or some REs of the second measurement resource (or the second measurement signal resource) that are located in the symbol #H).

Further, the first terminal device may determine the first measurement resource and/or the second measurement resource in a plurality of manners.

In an optional example, in this example of this application, the method 200 may further include:

sending, by the first network side device, instruction information to the first terminal device; and correspondingly, receiving, by the first terminal device, the instruction information sent by the first network side device, where the instruction information is used to instruct the first terminal device to perform the interference measurement.

Specifically, the first terminal device may perform a plurality of types of measurement on a signal on a resource, for example, channel measurement and interference measurement. Measurement manners (or measurement resources) corresponding to different measurement may be different. Some resources may be predefined for the interference measurement according to a protocol or an agreement. In this case, after receiving the instruction information, the first terminal device may perform the interference measurement by using the predefined resources. For example, assuming that according to the agreement, the first terminal device performs the interference measurement based on the first subcarrier in each of S ($S\geq1$) (2, 1) patterns, and performs background noise measurement of the interference measurement based on the second subcarrier in each of the S (2, 1) patterns, the first terminal device may determine the first measurement resource and/or the second measurement resource after receiving the instruction information.

Optionally, the method 200 may further include:

determining, by the first terminal device, the first measurement resource and/or the second measurement resource based on the configuration information of the interference measurement resource.

The first network side device sends the configuration information of the interference measurement resource to the first terminal device; and correspondingly, the first terminal device receives the configuration information of the interference measurement resource that is sent by the first network side device. Optionally, the configuration information of the interference measurement resource is used to indicate the CSI-RS resource. For example, the configuration information of the interference measurement resource may be used to indicate the CSI-RS pattern.

Specifically, the first terminal device may determine the first measurement resource based on the configuration information of the interference measurement resource and the instruction information.

In another optional example, the method 200 may include:

sending, by the first network side device, first measurement resource information to the first terminal device; and correspondingly, receiving, by the first terminal device, the first measurement resource information sent by the first network side device, where the first measurement resource information is used to indicate the first measurement resource.

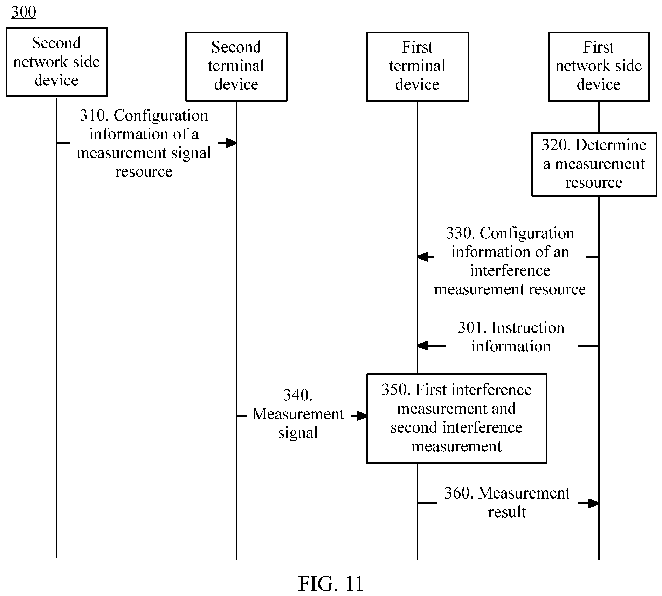

It should be understood that for a manner of determining, by the first terminal device, the second measurement resource, reference may be made to the foregoing related descriptions of determining the first measurement resource. For example, the first terminal device may determine the second measurement resource based on the interference measurement resource. FIG. 6 is still used as an example. Assuming that the interference measurement resource is the resource #A shown in FIG. 6, the first terminal device may determine that the second measurement resource is a resource #d shown in FIG. 6. Assuming that the interference measurement resource is the resource #B shown in FIG. 6, the first terminal device may determine that the second measurement resource is a resource #e shown in FIG. 6. Assuming that the interference measurement resource is the resource #C shown in FIG. 6, the first terminal device may determine that the second measurement resource is a resource #f shown in FIG. 6. The foregoing describes an example of the interference measurement method according to this example of this application with reference to FIG. 2 to FIG. 10. The following describes another example of an interference measurement method according to an example of this application with reference to FIG. 11.

FIG. 11 is a schematic interaction diagram of another example of an interference measurement method according to an example of this application. It should be understood that FIG. 11 shows detailed steps or operations of the interference measurement method. However, these steps or operations are merely examples. In this example of this application, other operations or variants of various operations in FIG. 11 may be further performed. Alternatively, in this example of this application, only some operations in FIG. 11 may be performed. Further, the method in this example of this application may include some of the operations shown in FIG. 11.

The method 300 may be performed by a first terminal device, a second terminal device, a first network side device, and a second network side device.

As shown in FIG. 11, the method 300 may include the following steps.

310. The second network side device sends configuration information of a measurement signal resource, and the second terminal device receives the configuration information of the measurement signal resource.

Specifically, the configuration information of the measurement signal resource may be used by the second terminal device to determine a first measurement signal resource, and the first measurement signal resource is used by the second terminal device to send a measurement signal.

320. The first network side device determines the measurement signal resource (optionally, the measurement signal resource may include at least one of the first measurement signal resource and a second measurement signal resource).

Optionally, the first network side device may determine the first measurement signal resource by using the second network side device.

330. The first network side device sends configuration information of an interference measurement resource based on the first measurement signal resource; and correspondingly, the first terminal device receives the configuration information of the interference measurement resource.

The configuration information of the interference measurement resource is used by the first terminal device to determine a first measurement resource and a second measurement resource. A time-frequency location of the first measurement resource corresponds to all or some time-frequency locations of the first measurement signal resource (the "corresponding to" means "same as" when timing alignment is not considered). A time-frequency location of the second measurement resource corresponds to all or some time-frequency locations of the second measurement signal resource. The second measurement signal resource is a reserved resource, and the second terminal device and a terminal device served by the second network side device do not use the second measurement signal resource to transmit signals.

340. The second terminal device sends the measurement signal on the first measurement signal resource.

350. The first terminal device performs first interference measurement by using the first measurement resource, and performs second interference measurement by using the second measurement resource.

360. The first terminal device reports, to the first network side device, an interference measurement result obtained based on the first interference measurement and the second interference measurement.

It should be understood that, for detailed descriptions of the method 300, reference may be made to the related descriptions in the foregoing method 200. For brevity, details are not described herein again.

Optionally, the method 300 may further include the following step:

301. The first network side device sends instruction information to the first terminal device, where the instruction information is used to instruct to perform interference measurement (optionally, the instruction information may be used to instruct the first terminal device to perform the first interference measurement and the second interference measurement).

The first terminal device may determine, based on the instruction information, to perform the first interference measurement and the second interference measurement, and report the measurement result to the first network side device based on the first interference measurement and the second interference measurement, so that the first network side device can perform coordination or adjustment based on the measurement result, to reduce interference or reduce impact of interference on data transmission in a current cell.

Specifically, for a transmit end in the interference measurement, for example, the second terminal device, the second terminal device may only need to receive the configuration information of the measurement signal resource (to determine the first measurement signal resource) from the second network side device, and determine a comb used to send the measurement signal. The second terminal device may not need to know a comb for background measurement. For a cell in which the transmit end is located, the second network side device may configure that comb resources used to send the measurement signal are fewer than total comb resources. For a receive end in the interference measurement, for example, the first terminal device, the first terminal device may need to know a location of a resource element for the background measurement (in other words, the first terminal device needs to learn of the second measurement resource). This may affect measurement result processing and measurement result reporting of the first terminal device.

The J$^{th}$ comb among a maximum quantity of combs may be predefined as a comb used for the background measurement. If patterns with two combs and four combs are finally used in a standard, a value of J is preferably 1 or 2 (assuming that there are a maximum of four combs, corresponding to combs with sequence numbers 1, 2, 3, and 4, respectively). In this case, when there are two combs, the method may also be used. Certainly, there are also other combs. If a protocol predefines a fixed comb used for the background measurement, the first terminal device does not need to determine a location for background noise measurement by using an indication of the first network side device. However, the first terminal device needs to know that interference measurement is currently performed between terminal devices. This may require an indication of the first network side device. The indication of the first network side device may be broadcast signaling, higher layer signaling (including RRC signaling), MAC CE signaling, L1 physical layer signaling (for example, DCI), or the like.

A possible implementation method is that the first network side device configures, by using the broadcast signaling or the RRC signaling, a resource used for the interference measurement, and the first terminal device performs the interference measurement by using the corresponding measurement resource. Alternatively, the first network side device configures, by using the broadcast signaling or the RRC signaling, a resource used for the interference measurement. When a terminal device (for example, the first terminal device) needs to perform interference measurement, the first network side device notifies the first terminal device by using the DCI or the MAC CE, and triggers the first terminal device to perform the interference measurement. When performing the measurement, the first terminal device can know a location of a resource for the background measurement based on predefined information. Certainly, the first network side device may use another indication method.

The first terminal device may also determine background interference based on a measured interference value. For example, a minimum power value measured on a group of REs may be considered as the background interference.

In addition to the method in which a fixed comb is used for the background measurement, a variable comb location may be alternatively used to measure the background interference. The comb location may be indicated by the first network side device to the first terminal device, or determined based on a configured measurement resource. The indication of the first network side device may be broadcast signaling, higher layer signaling (including RRC signaling), MAC CE signaling, L1 physical layer signaling (for example, DCI), or the like. The comb used for the background measurement in a period of time may be configured by using the broadcast signaling or the RRC signaling, or indicated by using the DCI or the MAC CE signaling. If no indication is received from the first network side device, a default comb may be used for the background measurement. The default comb needs to be predefined.

The interference measurement resource may have a plurality of patterns. A CSI-RS pattern is used as an example. A ZP CSI-RS resource configured by the first network side device for the first terminal device includes a CSI-RS. During the interference measurement, the first network side device (a cell 1) and the second network side device (a cell 2) need to coordinate information such as a measurement resource. Therefore, the second network side device notifies the first network side device of terminal devices that send measurement signals, as well as resources used by the terminal devices to send the measurement signals. The first network side device can know information about combs, for example, two combs or four combs, used by the second network side device to send the measurement signal. The first network side device configures a corresponding measurement resource for the first terminal device based on the comb information. For example, if the second network side device configures an SRS with two combs, the first network side device may configure one or more (2, 1) CSI-RS resources for the first terminal device. If the second network side device configures an SRS with four combs, the first network side device may configure one or more (4, 1) or (2, 2) CSI-RS resources for the first terminal device. In addition, it is assumed that the comb location for the background measurement may be determined based on a configured comb pattern. For example, when a spacing on a comb is 2, the 2$^{nd}$ comb is used for the background measurement; or when a spacing on a comb is 4, the 3$^{rd}$ comb is used for the background measurement. In this case, the first terminal device can determine, based on the measurement resource configured by the first network side device, a resource used for the background measurement. For example, if the first network side device configures one or more (Y, Z) ZP CSI-RS resources, or specifically, (2, 1) ZP CSI-RS resources, the first terminal device may determine that the 2$^{nd}$ RE in frequency domain is used for the background measurement. If the first network side device configures one or more (Y, Z) ZP CSI-RS resources, or specifically, (4, 1) ZP CSI-RS resources, the first terminal device may determine that the 3$^{rd}$ RE in frequency domain is used for the background measurement. For detailed descriptions, refer to the foregoing descriptions. For brevity, details are not described herein again.

One or more combs may be used for the background measurement. Because other cells may send different signals on different combs, a background of an RE for the interference measurement is different from a background measured on an RE specially used for the background measurement. In this case, a plurality of combs may be used for the background measurement, and an average value is obtained from a plurality of measured values. Alternatively, different REs for the interference measurement correspond to one RE used for the background noise measurement. For example, a group of CSI-RSs includes four REs. The 1st RE and the 4th RE are used to measure interference of different terminal devices, and the 2nd RE and the 3rd RE are used to measure backgrounds. Interference measured on the 2nd RE may be considered as a background of total interference measured on the 1st RE, and interference measured on the 3rd RE is considered as a background of total interference measured on the 4th RE. When the plurality of combs are used for the background measurement, locations of the plurality of combs may be predefined or indicated by the second network side device, and an indication method is similar to the foregoing method.

Time domain and frequency domain periods of a resource used for the background measurement may be the same as or different from time domain and frequency domain periods of a normal interference measurement resource. For example, two frequency domain RBs at a same time (one slot, 12 consecutive subcarriers) are an RB 1 and an RB 2, and an interference measurement resource is configured as an SRS with each RB located in four symbols 1, 2, 3, and 4. Blank combs used for the background may exist in symbols 1, 2, 3, and 4 of both the RB 1 and the RB 2. If it is considered that backgrounds between the two RBs or between the symbols differ slightly, blank combs may be alternatively configured on only some RBs (the RB 1 or the RB 2) or some symbols for the background measurement. Assuming that a blank comb is configured in only a symbol 1 of the RB 1 for the background measurement, it may be considered that a background on another RB or in another symbol is equal to a background measured in the symbol 1 of the RB 1.

Optionally, in this example of this application, if terminal devices in different cells or different terminal devices in a same cell have different measurement signal sending powers, and the powers differ greatly, interference measurement results are quite different, and reporting overheads are relatively high. In this case, a plurality of quantized intervals may be considered. When a same measurement reporting value corresponds to different quantized intervals, corresponding interference measurement values are different.

For example, the first network side device indicates a reporting quantized interval to the first terminal device by using signaling. The first terminal device may alternatively determine a reporting quantized interval by using other information. For example, if the first terminal device may know an ID of a cell in which the second terminal device sending the measurement signal is located, the first terminal device may determine a quantized interval based on the cell ID. If during the interference measurement, the network side devices have negotiated that some measurement resources are dedicated for sending a measurement signal with a relatively high power and some measurement resources are dedicated for sending a measurement signal with a relatively low power, the first terminal device may determine, based on a frequency domain location of a resource for receiving the measurement signal, a quantized interval for reporting the interference measurement result. The method helps to reduce overheads of reporting the measurement result by the terminal device.

The foregoing describes the methods according to the examples. The following describes devices according to the examples of this application.

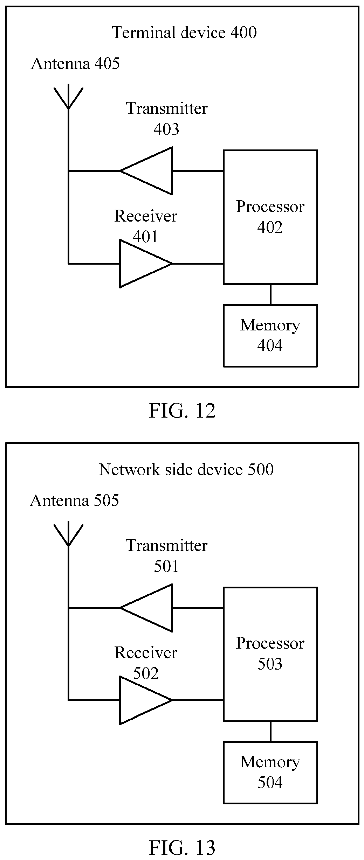

FIG. 12 is a schematic structural diagram of a terminal device according to an example of this application. As shown in FIG. 12, the terminal device 400 includes a processor 402 and a receiver 401. Optionally, the terminal device may further include a transmitter 403. The transmitter 403 and the receiver 401 are configured to support communication between a network side device and the terminal device. Optionally, the terminal device may further include a memory 404. Optionally, the terminal device may further include an antenna 405.

The receiver 401 is configured to receive configuration information of an interference measurement resource from the network side device.

The processor 402 is configured to perform first interference measurement by using a first measurement resource, where the first measurement resource is a proper subset of the interference measurement resource, a quantity of resource elements of the first measurement resource that are located in a same symbol is M≥2, and a spacing in frequency domain between two adjacent resource elements of the M resource elements of the first measurement resource that are located in the same symbol is more than one subcarrier.

Optionally, the spacing in frequency domain between the two adjacent resource elements of the M resource elements of the first measurement resource that are located in the same symbol is N subcarriers or subcarriers whose quantity is an integer multiple of N, where N≥2; and/or, if resource elements included in the first measurement resource are located in at least two symbols, a spacing between adjacent symbols of the at least two symbols is an even quantity of symbols. Optionally, the receiver 401 is further configured to receive instruction information sent by the network side device, where the instruction information is used to instruct the terminal device to perform the first interference measurement by using the first measurement resource.

Optionally, the processor 402 is specifically configured to perform the first interference measurement according to a predefined rule by using the first measurement resource.

Optionally, the terminal device further includes a transmitter 403, configured to report an interference measurement result obtained based on the first interference measurement.

Optionally, the processor 402 is further configured to perform second interference measurement by using a second measurement resource, where the second measurement resource is a proper subset of the interference measurement resource, a quantity of resource elements of the second measurement resource that are located in a same symbol is $K \geq 2$, a spacing in frequency domain between two adjacent resource elements of the K resource elements of the second measurement resource that are located in the same symbol is more than one subcarrier, and a resource element of the second measurement resource does not overlap with a resource element of the first measurement resource; and the terminal device further includes a transmitter 403, configured to report an interference measurement result obtained based on the first interference measurement and the second interference measurement.

The units in the terminal device 400 provided in this application and the foregoing other operations or functions are separately for implementing a corresponding procedure performed by the first terminal device in the method 200 provided in this application. For brevity, details are not described herein again.

It should be understood that a physical unit in the terminal device 400 may correspond to a virtual unit. For example, the processor 402 may correspond to a processing unit, the transmitter 403 may correspond to a sending unit, and the receiver 401 may correspond to a receiving unit. FIG. 13 is a schematic structural diagram of a network side device according to an example of this application. As shown in FIG. 13, the network side device includes: a transmitter 501.

Optionally, the network side device may further include a receiver 502. The transmitter 501 and the receiver 502 are configured to support communication between the network side device and a terminal device. Optionally, the network side device further includes a processor 503. Optionally, the network side device may further include a memory 504. Optionally, the network side device may further include an antenna 505.

The transmitter 501 is configured to send configuration information of an interference measurement resource, where the interference measurement resource includes a first measurement resource, the first measurement resource is used by the terminal device to perform first interference measurement, the first measurement resource is a proper subset of the interference measurement resource, a quantity of resource elements of the first measurement resource that are located in a same symbol is $M \geq 2$, and a spacing in frequency domain between two adjacent resource elements of the M resource elements of the first measurement resource that are located in the same symbol is more than one subcarrier.

Optionally, the spacing in frequency domain between the two adjacent resource elements of the M resource elements of the first measurement resource that are located in the same symbol is N subcarriers or subcarriers whose quantity is an integer multiple of N, where $N \geq 2$; and/or, if resource elements included in the first measurement resource are located in at least two symbols, a spacing between adjacent symbols of the at least two symbols is an even quantity of symbols. Optionally, the transmitter 501 is further configured to send instruction information, where the instruction information is used to instruct the terminal device to perform the first interference measurement by using the first measurement resource.

Optionally, the network side device further includes a receiver 502, configured to receive, from the terminal device, an interference measurement result obtained based on the first interference measurement.

Optionally, the interference measurement resource further includes a second measurement resource, the second measurement resource is used by the terminal device to perform second interference measurement, the second measurement resource is a proper subset of the interference measurement resource, a quantity of resource elements of the second measurement resource that are located in a same symbol is $K \geq 2$, a spacing in frequency domain between two adjacent resource elements of the K resource elements of the second measurement resource that are located in the same symbol is more than one subcarrier, and a resource element of the second measurement resource does not overlap with a resource element of the first measurement resource; and the network side device further includes a receiver 502, configured to receive, from the terminal device, an interference measurement result obtained based on the first interference measurement and the second interference measurement.

The units in the device 500 provided in this application and the foregoing other operations or functions are separately for implementing a corresponding procedure performed by the first network side device in the method 100 provided in this application. For brevity, details are not described herein again.

It should be understood that a physical unit in the network side device 500 may correspond to a virtual unit. For example, the processor 503 may correspond to a processing unit, the transmitter 501 may correspond to a sending unit, and the receiver 502 may correspond to a receiving unit. A person of ordinary skill in the art may be aware that, in combination with the examples described in the examples disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method examples, and details are not described herein again.

In the several examples provided in this application, it should be understood that the disclosed system, apparatus, and method may be implemented in other manners. For example, the described apparatus examples are merely examples. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located on one position, or may be distributed on a plurality of network units. Some or all of the units may be selected based on actual requirements to achieve the objectives of the solutions of the examples.

In addition, functional units in the examples of this application may be integrated into one processing unit, or each of the units may exist alone physically, or two or more units are integrated into one unit.

It should be noted that the processor configured to implement the foregoing terminal device and network side device in this application may be a central processing unit (Central Processing Unit, CPU), a general purpose processor, a digital signal processor (Digital Signal Processor, DSP), an application-specific integrated circuit (Application-Specific Integrated Circuit, ASIC), a field programmable gate array (Field Programmable Gate Array, FPGA), or another programmable logic device, a transistor logic device, a hardware component, or a combination thereof. The processor may implement or perform various example logical blocks, modules, and circuits described with reference to content disclosed in this application. Alternatively, the processor may be a combination of processors implementing a computing function, for example, a combination of one or more microprocessors, or a combination of the DSP and a microprocessor.

Method or algorithm steps described in combination with the content disclosed in this application may be implemented by hardware, or may be implemented by a processor by executing a software instruction. The software instruction may include a corresponding software module. The software module may be stored in a random access memory (Random Access Memory, RAM), a flash memory, a read-only memory (Read-Only Memory, ROM), an erasable programmable read-only memory (Erasable Programmable Read-Only Memory, EPROM), an electrically erasable programmable read-only memory (Electrically Erasable Programmable Read-Only Memory, EEPROM), a register, a hard disk, a removable hard disk, a compact disc read-only memory (Compact Disc Read-Only Memory, CD-ROM), or any other form of storage medium well-known in the art. For example, a storage medium is coupled to the processor, so that the processor can read information from the storage medium or write information into the storage medium. Certainly, the storage medium may be a component of the processor. The processor and the storage medium may be located in the ASIC. In addition, the ASIC may be located in the network side device and/or the terminal device. Certainly, the processor and the storage medium may exist in the network side device and/or the terminal device as discrete assemblies.

When the functions are implemented in a form of a software functional unit and sold or used as an independent product, the functions may be stored in a computer readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network side device, or the like) to perform all or some of the steps of the methods described in the examples of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An interference measurement method, to be performed by a terminal device, wherein the method comprises:

   receiving, by the terminal device (400), configuration information of an interference measurement resource (#A, #B, #C) from a network side device (500); and
   performing, by the terminal device (400), first interference measurement by using a first measurement resource (#a, #b, #c), wherein the first measurement resource (#a, #b, #c) is a proper subset of the interference measurement resource (#A, #B, #C), a quantity of resource elements of the first measurement resource (#a, #b, #c) that are located in a same symbol is $M \geq 2$, and a spacing in frequency domain between two adjacent resource elements of the M resource elements of the first measurement resource that are located in the same symbol is more than one subcarrier,
wherein
the terminal device reports an interference measurement result Pinterfere, where Pinterfere is according to the formula:

$$\text{Pinterfere}=(2\text{RSSI\_P0}-\text{RSSI\_P2})-(2\text{RSSI\_P1}-\text{RSSI\_P3}),$$

where

Pinterfere is an interference strength of interference caused by uplink communication of a second terminal device to downlink communication of the terminal device,
(2RSSI_P0-RSSI_P2) is a total power value obtained in the first interference measurement, (2RSSI_P1-RSSI_P3) is a total power value obtained in a background noise measurement,
RSSI_P0 is a total power value obtained by measuring, by the terminal device, resource elements of the first measurement resource that correspond to a symbol #H-1,
$\text{RSSI\_P}_2$ is a total power value obtained by measuring, by the terminal device, resource elements of the first measurement resource corresponding to a symbol #H+1,
$\text{RSSI\_P}_1$ is a total power value obtained by measuring, by the terminal device, resource elements of a second measurement resource that correspond to a symbol #H-1, and
$\text{RSSI\_P}_3$ is a total power value obtained by measuring, by the terminal device, resource elements of the second measurement resource corresponding to a symbol #H+1,
wherein the resources of the first measurement resource do not overlap resources of the second measurement.

2. The method according to claim 1, wherein the method further comprises:
receiving, by the terminal device (400), instruction information sent by the network side device (500), wherein the instruction information is used to instruct the terminal device (400) to perform the first interference measurement by using the first measurement resource (#a, #b, #c).

3. The method according to claim 1, wherein the performing, by the terminal device (400), first interference measurement by using a first measurement resource (#a, #b, #c) comprises:
performing, by the terminal device (400), the first interference measurement according to a predefined rule by using the first measurement resource (#a, #b, #c).

4. A terminal, comprising means adapted to execute the method according to any one of claims 1 to 3.

5. A computer readable storage medium, where the computer readable storage medium stores an instruction which when the instruction is run on a processor of a terminal device, causes the terminal device to perform the method according to any one of claims 1 to 3.

**Patentansprüche**

1. Interferenzmessverfahren, das durch eine Endgerätvorrichtung durchzuführen ist, wobei das Verfahren Folgendes umfasst:

Empfangen von Konfigurationsinformationen einer Interferenzmessressource (#A, #B, #C) von einer netzwerkseitigen Vorrichtung (500) durch die Endgerätvorrichtung (400); und
Durchführen einer ersten Interferenzmessung durch die Endgerätvorrichtung (400) unter Verwendung einer ersten Messressource (#a, #b, #c), wobei die erste Messressource (#a, #b, #c) eine geeignete Teilmenge der Interferenzmessressource (#A, #B, #C) ist, eine Menge von Ressourcenelementen der ersten Messressource (#a, #b, #c), die sich in einem gleichen Symbol befindet, $M \geq 2$ ist und ein Abstand in dem Frequenzbereich zwischen zwei benachbarten Ressourcenelementen der M Ressourcenelemente der ersten Messressource, die sich in dem gleichen Symbol befinden, mehr als ein Unterträger ist,
wobei
die Endgerätvorrichtung ein Interferenzmessergebnis Pinterfere meldet, wobei Pinterfere Folgendes ist gemäß

der Formel:

$$Pinterfere=(2RSSI\_P0-RSSI\_P2)-(2RSSI\_P1-RSSI\_P3),$$

worin

Pinterfere eine Interferenzstärke der Interferenz ist, die durch Uplink-Kommunikation einer zweiten Endgerätvorrichtung zu Downlink-Kommunikation der Endgerätvorrichtung bewirkt wird,

(2RSSI_P0-RSSI_P2) ein Gesamtleistungswert ist, der in der ersten Interferenzmessung erlangt wird, (2RSSI_P1-RSSI_P3) ein Gesamtleistungswert ist, der in einer Hintergrundgeräuschmessung erlangt wird,

RSSI_P0 ein Gesamtleistungswert ist, der durch Messen von Ressourcenelementen der ersten Messressource, die einem Symbol #H-1 entsprechen, durch die Endgerätvorrichtung erlangt wird, $RSSI\_P_2$ ein Gesamtleistungswert ist, der durch Messen von Ressourcenelementen der ersten Messressource, entsprechend einem Symbol #H+1, durch die Endgerätvorrichtung erlangt wird,

RSSI_P1 ein Gesamtleistungswert ist, der durch Messen von Ressourcenelementen einer zweiten Messressource, die einem Symbol #H-1 entsprechen, durch die Endgerätvorrichtung erlangt wird, und

$RSSI\_P_3$ ein Gesamtleistungswert ist, der durch Messen von Ressourcenelementen der zweiten Messressource, entsprechend einem Symbol #H+1, durch die Endgerätvorrichtung erlangt wird,

wobei die Ressourcen der ersten Messressource nicht überlappend zu Ressourcen der zweiten Messung sind.

2. Verfahren gemäß Anspruch 1, wobei das Verfahren ferner Folgendes umfasst:

   Empfangen von Anweisungsinformationen, die durch die netzwerkseitige Vorrichtung (500) gesendet werden, durch die Endgerätvorrichtung (400), wobei die Anweisungsinformationen dazu verwendet werden, die Endgerätvorrichtung (400) anzuweisen,

   die erste Interferenzmessung unter Verwendung der ersten Messressource (#a, #b, #c) durchzuführen.

3. Verfahren gemäß Anspruch 1, wobei das Durchführen der ersten Interferenzmessung durch die Endgerätvorrichtung (400) unter Verwendung einer ersten Messressource (#a, #b, #c) Folgendes umfasst:

   Durchführen der ersten Interferenzmessung gemäß einer vordefinierten Regel unter Verwendung der ersten Messressource (#a, #b, #c) durch die Endgerätvorrichtung (400).

4. Endgerät, umfassend Mittel, die dazu angepasst sind, das Verfahren gemäß einem der Ansprüche 1 bis 3 auszuführen.

5. Computerlesbares Speichermedium, wobei das computerlesbare Speichermedium eine Anweisung speichert, die, wenn die Anweisung auf einem Prozessor einer Endgerätvorrichtung läuft, bewirkt, dass die Endgerätvorrichtung das Verfahren gemäß einem der Ansprüche 1 bis 3 durchführt.

**Revendications**

1. Procédé de mesure d'interférence, à exécuter par un dispositif terminal, dans lequel le procédé comprend :

   la réception, par le dispositif terminal (400), d'informations de configuration d'une ressource de mesure d'interférence (#A, #B, #C) d'un dispositif côté réseau (500) ; et

   l'exécution, par le dispositif terminal (400), d'une première mesure d'interférence à l'aide d'une première ressource de mesure (#a, #b, #c), dans lequel la première ressource de mesure (#a, #b, #c) est un sous-ensemble approprié de la ressource de mesure d'interférence (#A, #B, #C), une quantité d'éléments de ressource de la première ressource de mesure (#a, #b, #c) qui sont situés dans un même symbole est $M \geq 2$, et un espacement dans le domaine fréquentiel entre deux éléments de ressource adjacents des M éléments de ressource de la première ressource de mesure qui sont situés dans le même symbole est plus d'une sous-porteuse,

   dans lequel

   le dispositif terminal rapporte un résultat de mesure d'interférence Pinterfere, où Pinterfere est selon la formule :

$$Pinterfere = (2RSSI\_P0 - RSSI\_P2) - (2RSSI\_P1 - RSSI\_P3),$$

où

Pinterfere est une force d'interférence d'interférence provoquée par une communication de liaison montante d'un second dispositif terminal vers une communication de liaison descendante du dispositif terminal,

(2RSSI_P0-RSSI_P2) est une valeur de puissance totale obtenue dans la première mesure d'interférence, (2RSSI_P1-RSSI_P3) est une valeur de puissance totale obtenue dans une mesure de bruit de fond,

RSSI_P0 est une valeur de puissance totale obtenue en mesurant, par le dispositif terminal, des éléments de ressource de la première ressource de mesure qui correspondent à un symbole #H-1,

RSSI_P2 est une valeur de puissance totale obtenue en mesurant, par le dispositif terminal, des éléments de ressource de la première ressource de mesure qui correspondent à un symbole #H+1,

RSSI_P1 est une valeur de puissance totale obtenue en mesurant, par le dispositif terminal, des éléments de ressource d'une seconde ressource de mesure qui correspondent à un symbole #H-1, et

RSSI_P3 est une valeur de puissance totale obtenue en mesurant, par le dispositif terminal, des éléments de ressource de la seconde ressource de mesure qui correspondent à un symbole #H+1, dans lequel les ressources de la première ressource de mesure ne chevauchent pas les ressources de la seconde mesure.

2. Procédé selon la revendication 1, dans lequel le procédé comprend également :
la réception, par le dispositif terminal (400), d'informations d'instruction envoyées par le dispositif côté réseau (500), dans lequel les informations d'instruction sont utilisées pour ordonner au dispositif terminal (400) d'effectuer la première mesure d'interférence à l'aide de la première ressource de mesure (#a, #b, #c).

3. Procédé selon la revendication 1, dans lequel l'exécution, par le dispositif terminal (400), d'une première mesure d'interférence à l'aide d'une première ressource de mesure (#a, #b, #c) comprend :
l'exécution, par le dispositif terminal (400), de la première mesure d'interférence selon une règle prédéfinie à l'aide de la première ressource de mesure (#a, #b, #c).

4. Terminal, comprenant des moyens adaptés pour mettre en œuvre le procédé selon l'une quelconque des revendications 1 à 3.

5. Support de stockage lisible par ordinateur, où le support de stockage lisible par ordinateur stocke une instruction qui, lorsqu'elle est exécutée sur un processeur d'un dispositif terminal, amène le dispositif terminal à exécuter le procédé selon l'une quelconque des revendications 1 à 3.

101    Cross-link    103
       interference

102    104

FIG. 1

FIG. 2

200

| Second terminal device | First terminal device | First network side device |

210. Configuration information of an interference measurement resource

220. Measurement signal

230. Interference measurement

240. Measurement result

FIG. 3

FIG. 4

FIG. 5

FIG. 6

FIG. 7

Measurement
signal
resource

| |
|---|
| 1 |
| 2 |
| 3 |
| 4 |
| 5 |
| 6 |
| 7 |
| 8 |
| 9 |
| 10 |
| 11 |
| 12 |

⋮

First measurement
signal resource

Second measurement
signal resource

FIG. 8

FIG. 9

FIG. 10

FIG. 11

Terminal device 400

Antenna 405

Transmitter
403

Receiver
401

Processor
402

Memory
404

FIG. 12

Network side device 500

Antenna 505

Transmitter
501

Receiver
502

Processor
503

Memory
504

FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2701423 A1
- WO 2013025558 A1